Europäisches Patentamt

European Patent Office

Office européen des brevets

(11) Veröffentlichungsnummer: **0 300 182**
**A1**

## (12) EUROPÄISCHE PATENTANMELDUNG

(21) Anmeldenummer: **88109175.5**

(22) Anmeldetag: **09.06.88**

(51) Int. Cl.4: **B01D 46/06 , B01D 29/14**

(30) Priorität: **18.07.87 DE 3723807**

(43) Veröffentlichungstag der Anmeldung:
**25.01.89 Patentblatt 89/04**

(84) Benannte Vertragsstaaten:
**AT BE DE ES FR GB IT NL**

(71) Anmelder: **KNECHT Filterwerke GmbH**
**Haldenstrasse 48**
**D-7000 Stuttgart 50(DE)**

(72) Erfinder: **Baumann, Peter**
**Spitalackerweg 4/A**
**D-7000 Stuttgart 80(DE)**
Erfinder: **Weller, Günter**
**Brigachstrasse 8**
**D-7000 Stuttgart 50(DE)**
Erfinder: **Becker, Friedhelm**
**Zollernstrasse 2**
**D-7257 Ditzingen(DE)**

(74) Vertreter: **Pfusch, Volker, Dipl.-Ing.**
**MAHLE GMBH Patentabteilung Pragstrasse**
**26-46 Postfach 50 07 69**
**D-7000 Stuttgart 50(DE)**

(54) **Rohrförmiges Filterelement mit einem aussen vom Filtermaterial überzogenen Stützrohr.**

(57) Bei einem rohrförmigen Filterelement, bei dem an die Enden eines starren radial gelochten außen mit einem Filtermaterial (1) überzogenen Stützrohres (2) das Stützrohr (2) und das Filtermaterial dichtend umschließende Endringe oder Endscheiben (3) angeformt sind, sollen diese besonders kostengünstig herstellbar sein.

Zu diesem Zweck bestehen die Endringe oder Endscheiben (3) aus direkt angespritztem Kunststoff. Besitzen die Endringe (3) radial in das Innere des Stützrohres hineingehende Bereiche, setzen sie sich aus wenigstens zwei Teilen zusammen, von denen der eine nicht in den Innendurchmesser hineinreichende Bereich angespritzt ist, während der andere Bereich ein getrennt hergestelltes nachträglich mit dem angespritzten Teil verbundenes Teil (Deckel 6) ist.

## Rohrförmiges Filterelement mit einem außen vom Filtermaterial überzogenen Stützrohr

Die Erfindung betrifft ein rohrförmiges Filterelement nach dem Oberbegriff des Patenanspruchs 1.

Bei solchen Filterelementen waren bisher die Endringe oder Endscheiben aus Blechteilen, bei denen der radial außen liegende Bereich an die Enden des mit Filtermaterial überzogenen Stützrohres dicht angepreßt wurde. Durch das Anpressen wurde die erforderliche Dichtung zwichen Rein- und Rohrraum geschaffen.

Hiervon ausgehend liegt der Erfindung die Aufgabe zugrunde, die Stützrohre mit Endscheiben zu versehen, die kostengünstiger herstellbar sind.

Gelöst wird diese Aufgabe durch eine Ausbildung der gattungsgemäßen Endringe bzw. Endscheiben nach dem kennzeichnenden Merkmal des Anspruchs 1.

Solche Endringe oder Endscheiben können grundsätzlich in den innerhalb des Innendurchmessers des Stützrohres liegenden Bereich hineinragen. Allerdings bedeutet dies bei der Herstellung der Endringe bzw. Endscheiben auf einer Spritzgußmaschine, daß ein Formwerkzeug von dem gegenüberliegenden Ende des Stützrohres durch das gesamte Stützrohr ziehbar sein muß, um einen im Bereich des Innendurchmessers des Stütz rohres liegenden Formabschluß zu erreichen. Zudem ist eine solche in den Innenbereich des Stützrohres hineinragende Endscheibe auch immer nur an einem Ende des Stützrohres möglich, da das Formwerkzeug ja immer zumindest an einer Seite in das Stützrohr hineinführbar sein muß.

Eine rationelle Lösung für radial in den Innenbereich des Stützrohres hineinragende Endscheiben enthält die Lehre des Anspruchs 2. Hierbei wird zunächst derjenige Teil der Endscheibe bzw. des Endringes angespritzt, der sich ausschließlich auf den Bereich außerhalb des Innendurchmessers des Stützrohres erstreckt. Der in den radial innerhalb des Innendurchmesserbereiches des Stützrohres hineinragende Teil des Endringes bzw. der Endscheibe ist ein getrennt gefertigtes nachträglich mit dem angespritzten Teil verbundenes Teil. Die Art der Verbindung ist an sich gleichgültig. Als zweckmäßig hat es sich jedoch erwiesen, das in den Innenbereich hineinragende Teil auf das angespritzte Teil aufzustecken, wozu eine Sitzrillen-Passung besonders geeignet ist.

Durch die Maßnahme nach Anspruch 3 ist auf einfache und besonders wirksame Weise ein allseitiges Umschließen der Endbereiche des Stützrohres mit dem angepreßten Kunststoff möglich.

Das angespritzte den Endring bzw. die Endscheibe bildende Teil kann mit einer Nut zur Aufnahme eines Dichtungsringes versehen werden. Bei geteilten Endringen bzw. Endscheiben können die anzubringenden Dichtmittel an dem nicht fest angespritzten Aufsetzteil anbringbar sein.

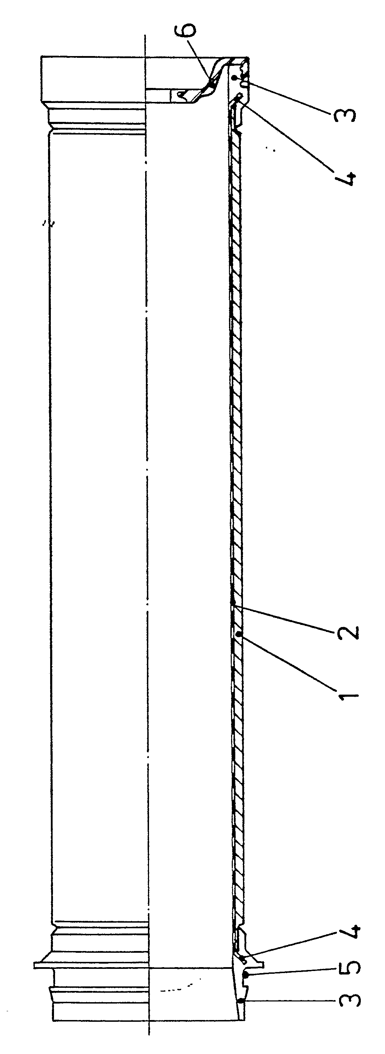

Ein Ausführungsbeispiel ist in der Zeichnung dargestellt, die ein rohrförmiges Filterelement halb in Ansicht und halb im Längsschnitt zeigt.

Bei dem dargestellten Filterelement sind an beiden Enden eines mit einem Faservlies 1 überzogenen Filterrohres 2 Endringe 3 in einer Spritzgußmaschine angespritzt, die ausschließlich außerhalb des Innendurchmesserbereiches des Stützrohres 2 liegen.

An den axialen Enden besitzt das Stützrohr 2 jeweils einen nach außen gewölbten Kragen 4. Radial innerhalb des Kragens 4 reicht der Kunststoff axial lediglich bis zu dessen inneren Kante.

Bei dem Endring 3 auf der linken Seite der Zeichnung ist eine Nut 5 zur Aufnahme eines Dichtringes bereits im Spritzguß eingeformt.

Bei dem Ende auf der rechten Seite der Zeichnung ist auf das direkt angespritzte Teil 3 ein ebenfalls aus Kunststoff getrennt gefertigter Deckel 6 auf den angespritzten Endring 3 aufgesetzt. Die Verbindung erfolgt über einen Klemmsitz bei dem die radial kontaktierenden Flächen des Ringbundes des Deckels 6 sowie des Endringes 3 jeweils mit sogenannten Sitzrillen versehen sind.

Eine Endscheibe, bei der der Endring 3 und der Deckel 6 ein einziges angespritztes Teil sind, ist möglich. In diesem Fall muß allerdings derjenige Bereich des Deckels 6, der zum Inneren des Stützrohres 2 weist, während der Spritzgußherstellung durch ein durch das gesamte Stützrohr 2 hindurchzuführendes Spritzguß-Formwandteil abgedeckt sein.

Das Stützrohr 2 ist zumindest in seinen Endbereichen längs geschlitzt und dadurch im Durchmesser leicht variierbar. Diese Ausführung ist beim Anspritzen des Kunststoffes zur Erzeugung der Endringe bzw. Endscheiben von Vorteil. Denn dadurch kann das Stützrohr in der Spritzgußmaschine auf einen die radial innen liegende Formwand bildenden Dorn aufgesteckt werden. gegen den das Stützrohr zusammen mit dem darauf befindlichen Filtermaterial durch die ringförmige Außenwand der Spritzgußform dichtend angepreßt werden kann. Hierdurch ist ein sicherer Verschluß der Spritzgußform an dem innerhalb des Stützrohres gelegenen Ende der Endringe bzw. Endscheiben gewährleistet.

## Ansprüche

1. Rohrförmiges Filterelement, bei dem an die Enden eines starren radial gelochten außen mit einem Filtermaterial überzogenen Stützrohres des Stützrohr und das Filtermaterial dichtend umschließende Endringe oder Endscheiben angeformt sind,
dadurch **gekennzeichnet,**
daß die Endringe oder Endscheiben (3) aus direkt angespritztem Kunststoff bestehen.

2. Rohrförmiges Filterelement nach Anspruch 1 mit innerhalb des Innendurchmessers des Stützrohres liegenden Bereichen der Endringe bzw. Endscheiben,
dadurch **gekennzeichnet,**
daß diese Endringe bzw. Endscheiben (3) jeweils aus zusammengesetzten Teilen (3, 6) bestehen, von denen das angespritzte Teil (3) ausschließlich außerhalb des Stützrohrinnendurchmesserbereiches liegt.

3. Rohrförmiges Filterelement nach Anspruch 1 oder 2,
dadurch **gekennzeichnet,**
daß an jedem Ende des Stützrohres (2) ein Bereich mit vergrößertem Innendurchmesser vorgesehen ist.

EP 0 300 182 A1

Europäisches Patentamt

# EUROPÄISCHER RECHERCHENBERICHT

Nummer der Anmeldung

EP 88 10 9175

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 535 063 (H. GERTSCH & CO.) <br> * Das ganze Dokument * <br> --- | 1 | B 01 D 46/06 <br> B 01 D 29/14 |
| A | FR-A-1 433 413 (FERCH & NABBEN) <br> * Das ganze Dokument * <br> --- | 1,2 | |
| A | GB-A- 938 518 (R. JAUME) <br> * Das ganze Dokument * <br> --- | 1,2 | |
| A | DE-B-1 222 479 (J.R.A. BERLINE) <br> * Das ganze Dokument * <br> --- | 3 | |
| A | FR-A-1 573 289 (SOCIETE D'EXPLORATION DES PLASTIQUES SEPLAST) <br> --- | | |
| A | DE-A-2 536 276 (SINTERMETALLWERK KREBSÖGE GmbH) <br> ----- | | |

| RECHERCHIERTE SACHGEBIETE (Int. Cl.4) |
|---|
| B 01 D 46/00 <br> B 01 D 29/00 <br> B 01 D 27/00 |

Der vorliegende Recherchenbericht wurde für alle Patentansprüche erstellt

| Recherchenort | Abschlußdatum der Recherche | Prüfer |
|---|---|---|
| DEN HAAG | 09-09-1988 | POLESAK, H.F. |